# FASCICULE DE BREVET EUROPEEN

(11) **EP 4 357 593 B1**
(45) Date de publication et mention de la délivrance du brevet: **03.12.2025**
(21) Numéro de dépôt: 23204450.3
(22) Date de dépôt: 18.10.2023
(51) Int. Cl.: F01P 11/02, B60K 11/02, B60H 1/00

(54) **SUPPORT POUR RÉSERVOIR DE DÉGAZAGE DE CHAUFFAGE D'HABITACLE DE VÉHICULE**
HALTERUNG FÜR EINEN ENTGASUNGSBEHÄLTER FÜR FAHRZEUGINNENRAUMHEIZUNGEN
SUPPORT FOR VEHICLE PASSENGER COMPARTMENT HEATING DEGASSING TANK

(30) Priorité: 19.10.2022 FR 2210807
(43) Date de publication de la demande: 24.04.2024
(73) Titulaire: Renault s.a.s, 92100 Boulogne Billancourt (FR)
(72) Inventeur: DAIN, Christophe, 78280 guyancourt (FR); GHIRARDINI, Armand, 78280 guyancourt (FR)

(56) Documents cités:
- EP-A1- 1 255 029
- CH-A- 372 195
- FR-A1- 2 918 621
- FR-A1- 2 921 019
- FR-A1- 3 099 726
- US-A1- 2010 201 160

## Description

### Domaine technique de l'invention

L'invention concerne un support pour un réservoir de dégazage de chauffage d'habitacle de véhicule. L'invention porte encore sur un agencement comprenant un tel support. L'invention porte encore sur un véhicule comprenant un tel agencement ou un tel support. L'invention porte encore sur un procédé de montage d'un tel agencement.

### Etat de la technique antérieure

Un véhicule, en particulier un véhicule automobile, comprend généralement un circuit ou système de chauffage d'un habitacle d'un tel véhicule. Généralement un tel circuit de chauffage comprend un réservoir de dégazage. Un tel réservoir de dégazage est volumineux. Un tel réservoir de dégazage est généralement implanté au sein d'un compartiment moteur d'un tel véhicule. Un tel compartiment moteur est très contraint et n'offre que très peu d'espace disponible.

Pour des raisons économiques, il convient de recourir à un réservoir de dégazage déjà existant. Egalement pour des raisons économiques, il convient de concevoir et fabriquer des véhicules électriques à partir d'éléments de caisse provenant d'autres types de véhicules en production ou ayant été produits dans le passé.

Ces contraintes rendent particulièrement complexe l'intégration d'un tel réservoir de dégazage au sein d'un compartiment moteur d'un véhicule, en particulier d'un véhicule électrique.

Les documents US2010/201160A1, FR3099726A1, CH372195A et FR2921019A1 divulguent des agencements connus pour véhicule automobile, comprenant à chaque fois un réservoir de dégazage.

### Présentation de l'invention

Le but de l'invention est de fournir un agencement pour un véhicule automobile et un procédé de montage remédiant aux inconvénients ci-dessus. En particulier l'invention propose un agencement particulièrement compact et permettant de loger un réservoir de dégazage dans un espace du compartiment moteur difficilement exploitable.

### Résumé de l'invention

Pour atteindre cet objectif, l'invention porte sur un agencement pour un véhicule automobile selon la revendication 1 et sur un procédé de montage selon la revendication 10.

Le moyen de pré-positionnement et le moyen de positionnement final peuvent être constitués par une forme commune, notamment une forme élémentaire commune comme une découpe.

Le moyen de pré-positionnement et le moyen de positionnement final peuvent être constitués par un trou oblong.

Le support principal peut comprendre des moyens de fixation destinés à assurer la fixation du support principal sur un passage de roue d'un tel véhicule automobile.

Les moyens de fixations peuvent comprendre un trou et une encoche.

Le support principal peut comprendre un moyen de fixation destiné à fixer un échangeur, notamment une tige filetée, et/ou peut comprendre un moyen de fixation destiné à fixer un tuyau de climatisation, notamment une tige filetée, et/ou peut comprendre un moyen de fixation destiné à fixer un tuyau d'eau, notamment un trou oblong.

L'invention porte sur un agencement pour un véhicule automobile, notamment pour un véhicule automobile électrique, comprenant un réservoir de dégazage pour un circuit de chauffage d'un habitacle d'un tel véhicule, le réservoir de dégazage comprenant une première saillie et une deuxième saillie, l'agencement comprenant :
- un passage de roue, notamment un passage de roue en tôle, le passage de roue comprenant un moyen de réception de la première saillie, notamment un trou, la première saillie du réservoir de dégazage étant logée dans le moyen de réception,
- un support principal tel que défini précédemment, le support principal étant fixé sur le passage de roue, la deuxième saillie du réservoir de dégazage coopérant avec le moyen de pré-positionnement ou le moyen de positionnement final,
- un support secondaire participant au maintien du réservoir de dégazage.

Le support secondaire peut comprendre un moyen de maintien du réservoir de dégazage, notamment une patte, le réservoir de dégazage pouvant comprendre un moyen de fixation, notamment un moyen de fixation comprenant un orifice, coopérant avec le moyen de maintien du support secondaire.

L'agencement peut comprendre un renfort de côté d'auvent agencé à proximité du passage de roue, le support secondaire pouvant être fixé sur le renfort de côté d'auvent.

L'invention porte encore sur un véhicule, notamment un véhicule automobile, comprenant un agencement tel que défini précédemment ou un support principal tel que défini précédemment.

L'invention porte encore sur un procédé de montage d'un agencement tel que défini précédemment, le procédé comprenant :
- une étape de montage d'un réservoir de dégazage sur un support secondaire de sorte à obtenir un ensemble,
- une étape de montage d'un support principal sur un passage de roue,
- une étape de pré-positionnement du réservoir de dégazage de sorte que la première saillie se loge dans le moyen de réception du passage de roue et de sorte que la deuxième saillie coopère avec le moyen de pré-positionnement du support, notamment via une translation sensiblement de haut en bas de l'ensemble,
- une étape de positionnement de l'ensemble par pivotement autour de l'axe de la première saillie du réservoir de dégazage de sorte que la deuxième saillie passe du moyen de pré-positionnement au moyen de positionnement final,
- une étape de fixation de l'ensemble sur le renfort de côté d'auvent de sorte à maintenir en position finale l'ensemble par rapport au support principal.

### Présentation des figures

Ces objets, caractéristiques et avantages de la présente invention seront exposés en détail dans la description suivante d'un mode de réalisation d'un support principal et d'un agencement faite à titre non-limitatif en relation avec les figures jointes parmi lesquelles :
La figure 1 est une vue schématique d'un véhicule automobile selon un mode de réalisation de l'invention.
La figure 2 est une vue en perspective d'un agencement selon un mode de réalisation de l'invention, avec un premier type de chauffage d'habitacle.
La figure 3 est une vue en perspective de l'agencement selon le mode de réalisation de l'invention, avec un deuxième type de chauffage d'habitacle.
La figure 4 est une vue de côté de l'agencement selon le mode de réalisation de l'invention, avec le deuxième type de chauffage d'habitacle.
La figure 5 est une vue en perspective de plusieurs phases de positionnement d'un ensemble de l'agencement selon le mode de réalisation.
La figure 6 est une vue en perspective partielle de l'agencement selon le mode de réalisation, un support principal étant fixé sur un passage de roue.
La figure 7 est une vue en perspective du support principal de l'agencement selon le mode de réalisation.
La figure 8 est une vue de détail schématique partielle en coupe selon un plan horizontal au niveau des première et deuxième saillies d'un réservoir de l'agencement selon le mode de réalisation.
La figure 9 est une vue en perspective d'un réservoir de dégazage de l'agencement selon le mode de réalisation de l'invention.
La figure 10 est une vue en perspective d'un support secondaire de l'agencement selon le mode de réalisation.
La figure 11 est une vue en perspective d'un ensemble comprenant le réservoir de dégazage et le support secondaire positionné par rapport au support principal de l'agencement selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

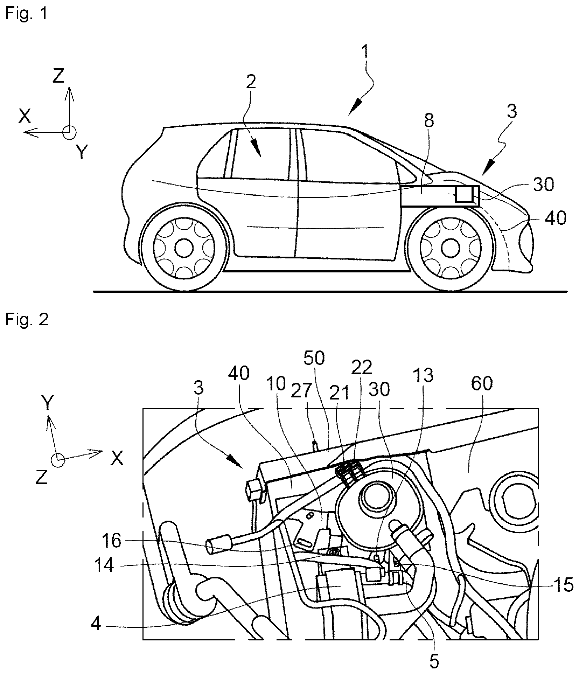

Comme illustré sur la figure 1, un véhicule, par exemple un véhicule automobile 1, comprend un circuit ou système de chauffage 8 d'un habitacle 2. De préférence, le véhicule 1 est un véhicule électrique ou un véhicule hybride de type rechargeable en roulant et/ou en se branchant à une prise de courant.

Le véhicule comprend un agencement 3.

Le véhicule ou l'agencement 3 comprend un passage de roue 40 agencé au niveau d'une roue avant droite. Le passage de roue 40 est de préférence en tôle, par exemple en tôle d'acier ou en tôle d'alliage d'aluminium. Le passage de roue 40 est de préférence un élément structurel d'une caisse ou châssis du véhicule 1.

Comme illustré sur la figure 2, le véhicule ou l'agencement 3 comprend un renfort de côté d'auvent 50. Le renfort de côté d'auvent est agencé, côté droit, à proximité du passage de roue 40.

L'agencement 3 comprend un réservoir ou bocal de dégazage 30 pour le circuit de chauffage 8 de l'habitacle 2 du véhicule.

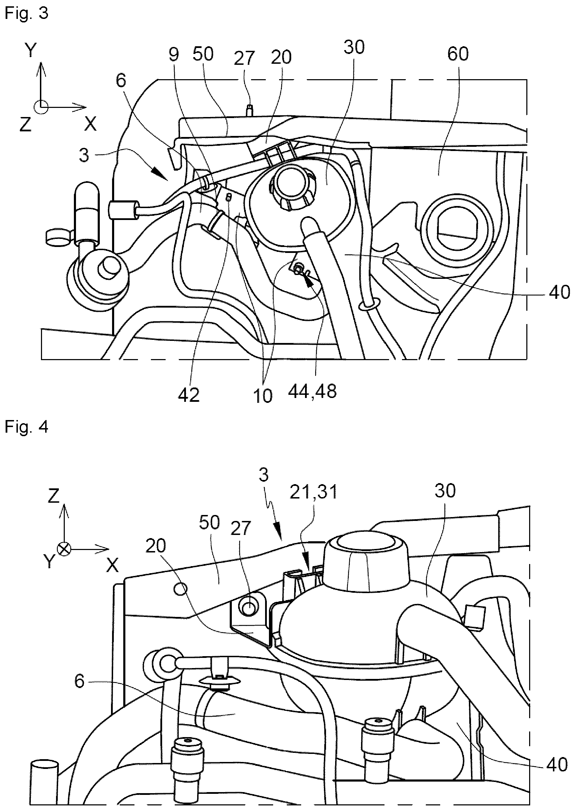

Comme illustré sur les figures 2 et 3, l'agencement 3 comprend encore un support principal 10. Le support principal 10 participe au moins partiellement à supporter, maintenir, reprendre le poids du réservoir de dégazage 30.

Comme illustré notamment sur la figure 4, l'agencement 3 comprend encore un support secondaire 20 ou patte de fixation participant au maintien du réservoir de dégazage 30.

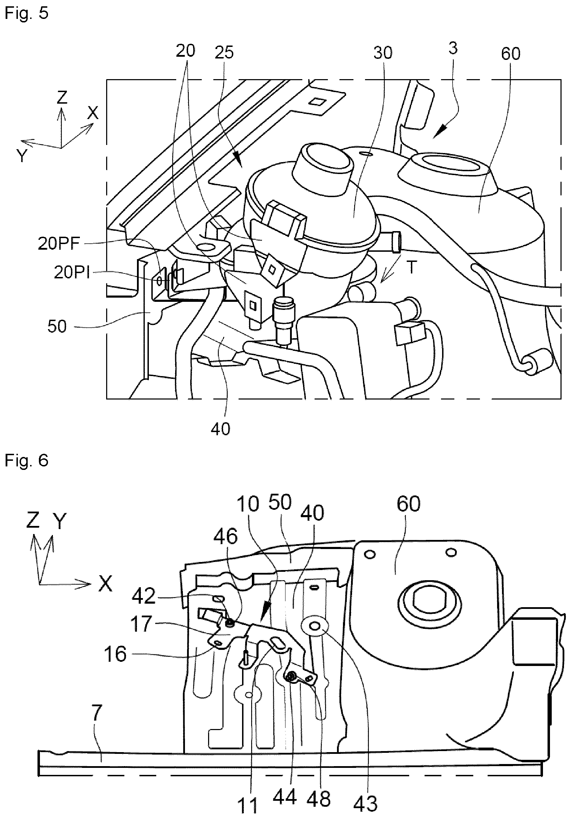

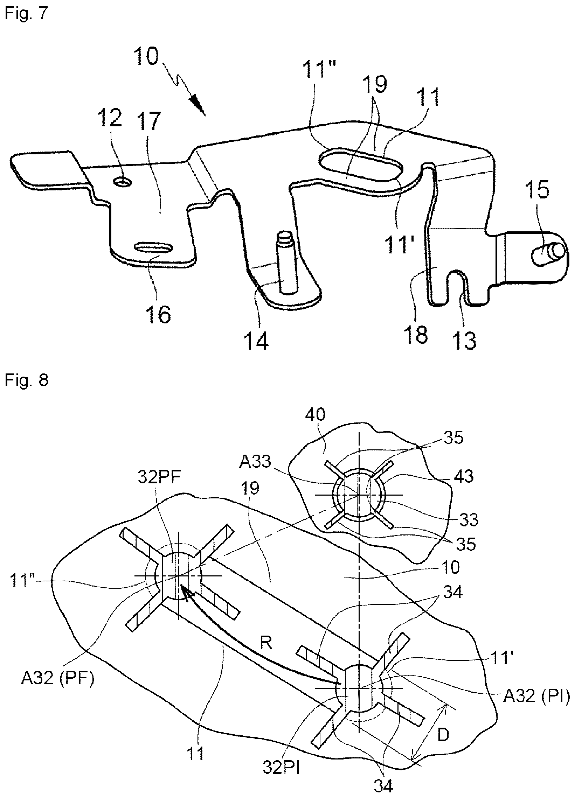

Plus précisément, comme illustré sur les figures 6 et 7, le support principal 10 comprend un moyen de pré-positionnement 11' et un moyen de positionnement final 11" du réservoir de dégazage 30. Avantageusement, le moyen de pré-positionnement 11' et le moyen de positionnement final 11" du réservoir de dégazage 30 sont constitués par une forme commune.

Par exemple, la forme est une forme élémentaire commune, telle qu'une découpe. De préférence, le moyen de pré-positionnement 11' et le moyen de positionnement final 11" du réservoir de dégazage 30 sont constitués par un trou oblong 11. Comme illustré en particulier sur la figure 8, de préférence, le moyen de pré-positionnement 11' est une première portion d'arête (en pointillés sur la figure 8) du trou oblong 11. Cette première portion d'arête 11' du trou 11 est alors agencée du côté intérieur du véhicule. De préférence, le moyen de positionnement final 11" est une deuxième portion d'arête (en pointillés sur la figure 8) du trou oblong 11. Cette deuxième portion d'arête 11' du trou 11 est alors agencée du côté extérieur du véhicule, c'est-à-dire davantage à proximité du renfort de côté d'auvent par rapport à la portion 11'. De préférence, les première et deuxième portions d'arête 11', 11" du trou oblong 11 sont les deux zones arrondies, ou sensiblement les deux zones arrondies, du trou oblong 11. Par exemple, le trou oblong 11 a un diamètre D de l'ordre de 6.5 mm, voire un diamètre supérieur.

De préférence, le support principal 10 comprend des moyens de fixation 12, 13 pour fixer le support principal 10 sur le passage de roue 40. Avantageusement, ces moyens de fixations comprennent un trou 12 et une encoche 13. Comme illustré sur la figure 7, de préférence, le trou 12 est ménagé dans une partie plane 17 du support 10. L'encoche ou fourche ou entaille 13 est ménagée dans une partie 18 s'étendant dans un plan non parallèle à un plan dans lequel s'étend la partie plane 17 recevant le trou 12.

Comme illustré sur la figure 2, un premier type de circuit de chauffage de l'habitacle comprend un échangeur 4, notamment un échangeur de type condenseur. Le premier type de circuit comprend de préférence un tuyau de climatisation 5, par exemple haute pression.

Comme illustré sur les figures 3 et 4, un deuxième type de circuit de chauffage de l'habitacle comprend de préférence un conduit ou tuyau 6 d'eau ou liquide spécifique.

De préférence, le support principal 10 comprend un moyen de fixation 14. Le moyen de fixation 14, par exemple de type vis ou tige filetée soudée sur le support 10, permet de fixer l'échangeur 4 en cas de véhicule équipé du système de chauffage utilisant le premier type de circuit notamment. Avantageusement, un plot de filtration est interposé entre l'échangeur 4 et le support principal 10. De préférence, le support principal 10 comprend encore un moyen de fixation 15. Le moyen de fixation 15, par exemple de type vis ou tige filetée soudée sur le support 10, permet de fixer le tuyau de climatisation 5 en cas de véhicule équipé du système de chauffage utilisant le premier type de circuit notamment (figure 2). De préférence, le support 10 comprend encore un moyen de fixation 16. Le moyen de fixation 16, par exemple de type trou oblong, permet de fixer le tuyau d'eau 6 en cas de véhicule équipé du système de chauffage utilisant le deuxième type de circuit (figures 3 et 4). De préférence, un collier ou un clip 9 entoure le tuyau 6 et vient se clipper, se fixer, s'enficher dans le trou oblong 16.

A noter que, comme illustré sur la figure 2, le trou oblong 16 demeure par exemple libre, inutilisé en cas de premier type de circuit de chauffage. De la même manière, les moyens de fixation 14, 15 demeurent par exemple libres, inutilisés, en cas de deuxième type de circuit de chauffage.

Comme illustré sur la figure 6, le passage de roue 40 comprend un trou ou orifice 43. Par exemple, le trou 43 a un diamètre de 6.2 mm. Le passage de roue 40 comprend encore un moyen de fixation 42, par exemple une tige filetée ou une vis soudée, et un moyen de fixation 44, par exemple une tige filetée ou une vis soudée. Alternativement, le moyen de fixation 42 est un boulon traversant le passage de roue 40 au sein d'un trou habituellement ménagé dans le passage de roue. Ainsi, il n'est pas utile de faire un trou spécifique dans le passage de roue.

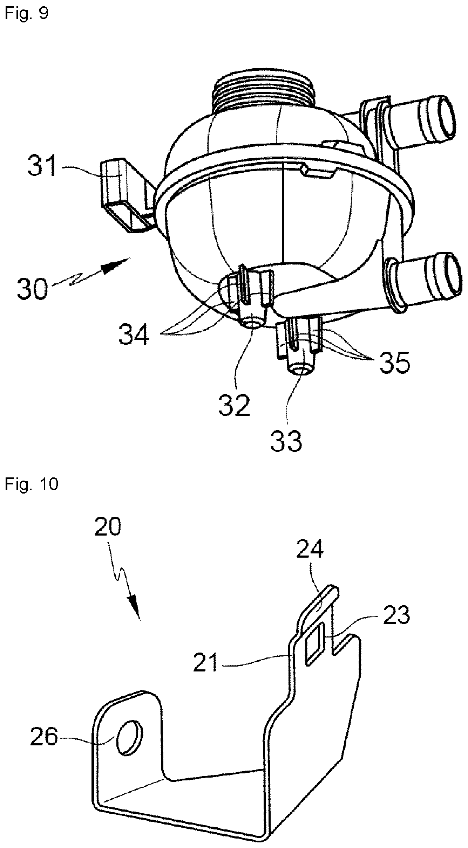

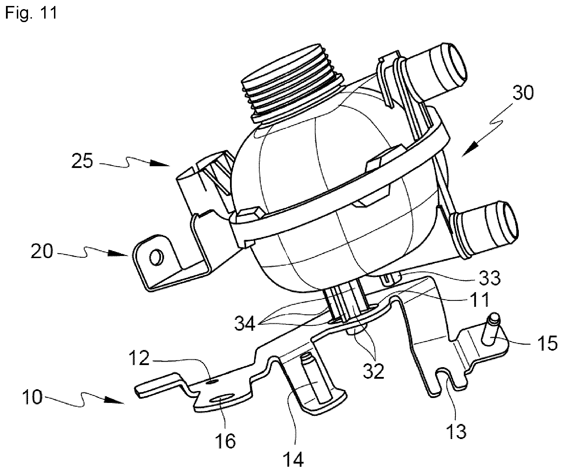

Comme évoqué précédemment, l'agencement 3 comprend encore le réservoir de dégazage 30. Plus précisément, comme illustré en particulier sur les figures 9 et 11, le réservoir de dégazage 30 comprend une première saillie ou extension ou protubérance 33. De préférence, la première saillie 33 est cylindrique ou sensiblement cylindrique. Avantageusement, la première saillie 33 est cylindrique et a un diamètre extérieur de 6 mm de sorte à pouvoir coopérer avec le trou 43 ménagé dans le passage de roue 40, sans jeu conséquent. De préférence, la première saillie 33 comprend un épaulement. Par exemple l'épaulement comprend des ailettes 35 s'étendant radialement depuis la surface cylindrique de la première saillie. De préférence quatre ailettes sont prévues agencées tous les 90 degrés sur la surface cylindrique de la première saillie. Toutefois, deux, trois, ou plus de quatre ailettes peuvent convenir également. Quoi qu'il en soit, l'épaulement de la première saillie s'étend par exemple jusqu'à un diamètre extérieur d'au moins 7 mm, voire de préférence d'au moins 10 mm.

Le réservoir de dégazage 30 comprend une deuxième saillie ou extension ou protubérance 32. De préférence, la deuxième saillie 32 est cylindrique ou sensiblement cylindrique. Par exemple, la deuxième saillie 32 est cylindrique et a un diamètre extérieur de 6 mm de sorte à coopérer avec les moyens de pré-positionnement 11' et de positionnement final 11" du trou oblong ménagés dans le support principal 10. Par exemple, le trou oblong 11 a un diamètre D au moins égal à 6.5 mm. De préférence, le diamètre D est de l'ordre de 8 mm, voire davantage, de sorte à obtenir un jeu conséquent entre la deuxième saillie 32 et le trou oblong 11. De préférence, comme illustré sur les figures 8, 9 et 11, la deuxième saillie 32 comprend un épaulement. Par exemple l'épaulement comprend des ailettes 34 s'étendant radialement depuis la surface cylindrique de la deuxième saillie. De préférence quatre ailettes sont prévues agencées tous les 90 degrés sur la surface cylindrique de la deuxième saillie. Toutefois, deux, trois, ou plus de quatre ailettes peuvent convenir également. Quoi qu'il en soit, l'épaulement de la première saillie s'étend jusqu'à un diamètre supérieur au diamètre D du trou oblong 11, par exemple un diamètre d'au moins 10 mm. Ainsi l'épaulement 34, et par conséquent le réservoir 30, coulisse sur une surface 19 (figures 7 et 8), de préférence plane ou sensiblement plane, du support principal. LA surface 19 est située à la périphérie du trou oblong 11. La surface de glissement 19 est par exemple définie, orientée, selon la trajectoire de vissage, par exemple de sorte à être perpendiculaire à la direction de fixation du support principal 10, par exemple perpendiculaire à la direction de vissage, sur le passage de roue 40. Alternativement, ou en complément, la surface de glissement 19 s'étend dans un plan perpendiculaire à la surface d'appui de la patte de fixation ou support secondaire 20 contre le renfort de côté d'auvent 50.

Comme illustré sur la figure 10, le support secondaire 20 comprend un moyen de maintien 21 du réservoir de dégazage 30. De préférence, le moyen de maintien 21 est une patte ou extension. Comme illustré sur la figure 9, le réservoir de dégazage 30 comprend un moyen de fixation 31. De préférence, le moyen de fixation comprenant un orifice. L'orifice, par exemple de type glissière destinée à être agencée selon la direction verticale ou sensiblement verticale, est apte à coopérer avec le moyen de maintien 21 du support secondaire 20. Par exemple l'orifice du moyen de fixation 31 vient se bloquer sur le moyen de maintien 21. Pour cela, de préférence, le moyen de maintien 21 comprend un orifice 23 et/ou une languette 24 de sorte à créer une contre forme. Ainsi, par exemple, le moyen de fixation 31 du réservoir 30 est apte à se fixer par clippage sur le moyen de maintien 21 par coopération d'une partie du moyen de fixation 31 avec le trou 23 et/ou avec la languette 24. A noter que le réservoir 30 fixé, notamment clippé, sur le support secondaire 20 forment à eux deux un ensemble 25, illustré notamment sur la figure 11.

Ainsi, l'agencement 3 comprend le réservoir de dégazage 30 fixé au support secondaire 20. Comme évoqué précédemment, le support secondaire 20 se fixe sur le renfort de côté d'auvent 50. Pour cela, par exemple, le support secondaire comprend un trou 26 (figure 10) et le renfort de côté d'auvent comprend un taraudage ou un écrou rapporté, par exemple un écrou soudé. Ainsi, comme illustré sur la figure 4, par exemple une vis 27 traverse le trou 26 du support secondaire 20 et vient coopérer avec le taraudage du renfort de côté d'auvent 50 pour assurer la fixation du support 20, et par conséquent de l'ensemble 25, par rapport au renfort de côté d'auvent 50. A noter que la première saillie 33 du réservoir de dégazage 30 est logée dans le moyen de réception 43 du passage de roue 40. De plus, le support principal 10 étant fixé sur le passage de roue 40, la deuxième saillie 32 du réservoir de dégazage 30 se loge au sein, ou au niveau, ou au contact du moyen de pré-positionnement 11' et/ou du moyen de positionnement final 11".

Un mode d'exécution d'un procédé de montage de l'agencement 3 va maintenant être décrit.

On procède à une étape de montage d'un réservoir de dégazage 30 sur un support secondaire 20. Par exemple, l'opérateur prend le support secondaire 20 équipé de la glissière 21 dans une main et le réservoir dans l'autre main et assemble les deux. On obtient alors un ensemble 25 comprenant ces deux éléments assemblés. De préférence, pour rappel, cette étape de montage se fait par coopération du moyen de fixation 31 du réservoir 30 avec la patte 21 du support secondaire 20. De préférence, ce montage se fait via un clippage entre le moyen de fixation 31 et la patte 21 équipée de la languette 24 et/ou de l'orifice 23. Par exemple, cette étape d'obtention de l'ensemble 25 est réalisée en temps masqué, autrement dit en bord de chaîne, de sorte à ne pas retarder la production de véhicules.

Précédemment, ou simultanément, ou à la suite de l'étape précédente, on procède à une étape de montage du support principal 10 sur le passage de roue 40 (figure 6). Pour cela, on vient placer, accoster, le support principal de sorte à ce que le trou 12 s'insère sur le moyen de fixation 42 ou en vis-à-vis d'un trou du passage de roue. Un moyen de serrage, par exemple un écrou 46, est prévu. Ainsi, on procède au serrage ou à la coopération du moyen de serrage sur ou avec le moyen de fixation 42 pour plaquer la partie plane 17 du support contre une surface plane ou sensiblement plane du passage de roue se trouvant en vis-à-vis. De préférence, par exemple du fait du serrage de l'écrou 46 dans le sens horaire et/ou sous l'effet de la gravité entraînant le support 10 en pivotement autour du moyen de fixation 42, l'encoche 13 du support 10 vient en butée, vient tomber, contre le moyen de fixation 44 de type tige filetée. Alternativement, le placement du support est effectué par l'opérateur de sorte à ce que l'encoche 13 s'engage autour du moyen de fixation 44. Un moyen de serrage, par exemple un écrou 48, est prévu. On procède ensuite au serrage du moyen 48 ce qui permet de bloquer, maintenir, le support principal 10 sur le passage de roue 40.

Ensuite, on procède à une étape de pré-positionnement de l'ensemble 25 par rapport au passage de roue 40 et au support principal 10. Pour cela, on procède à une translation T (figure 5) selon la direction verticale ou sensiblement verticale depuis le haut vers le bas, de l'ensemble 25. Eventuellement, cette translation T est précédée ou suivie d'une rotation autour d'un axe vertical ou sensiblement vertical. Grâce à ce ou ces mouvements, on place, on insère la première saillie 33 dans le trou 43 du passage de roue 40. Ainsi, la première saillie 33 se trouve bloquée selon les directions transversale Y et longitudinale X. Du fait de la présence de l'épaulement 35 sur la première saillie 33, le réservoir 30 est alors limité selon la direction verticale Z. Ainsi, le contact entre l'épaulement 35 et la zone périmétrique du trou 43 du passage de roue stoppe la translation suivant la direction verticale Z du réservoir. Simultanément ou sensiblement simultanément à la translation nécessaire à l'insertion de la première saillie 33 dans le trou 43, on place la deuxième saillie 32 pour qu'elle vienne au contact ou sensiblement au contact, coopérer, toucher, le moyen de pré-positionnement 11' du support 10. Pour rappel, le moyen de pré-positionnement 11' est une portion d'arête du trou oblong 11 agencé du côté d'un longeron 7 (figure 6). L'ensemble 25, et par conséquent le support secondaire 20, se trouvent alors dans une position de pré-positionnement ou position intermédiaire PI illustrée sur la figure 5.

On procède ensuite à une étape de pivotement ou rotation R pour arriver au positionnement final PF de l'ensemble 25 autour de l'axe A33 de la première saillie 33 du réservoir de dégazage 30, comme illustré sur la figure 8. Pour rappel, de préférence la première saillie a un diamètre de 6 mm alors que le trou 43 a un diamètre de 6.2 mm. Ainsi, le réservoir est guidé précisément en rotation autour de l'axe de la première saillie 33 sensiblement coaxial avec l'axe du trou 43. Ce pivotement permet de pivoter, de décaler, de translater sensiblement la deuxième saillie 32 depuis la position PI (position intermédiaire), c'est-à-dire depuis le moyen de pré-positionnement 11', jusqu'à la position PF (position finale), c'est-à-dire jusqu'au moyen de positionnement final 11". Autrement dit, la deuxième saillie 32 passe d'un contact ou sensiblement d'un contact contre la portion arrondie 11' (pré-positionnement) à un contact ou sensiblement un contact contre la portion arrondie 11" (positionnement final) du trou oblong 11. Grâce au jeu prévu entre la deuxième saillie 32 et le trou oblong 11, ce déplacement courbé R selon le rayon s'étendant entre l'axe A33 de la première saillie 33 et l'axe A32 de la deuxième saillie 32 est possible bien que l'orifice du trou oblong 11 soit rectiligne.

A noter qu'alternativement, l'orifice du trou oblong peut présenter une courbure de rayon égal ou sensiblement égal à la valeur de l'entraxe entre les deux saillies 32, 33 de sorte à permettre un jeu davantage réduit entre le trou oblong 11 et la deuxième saillie 32.

On procède ensuite à une étape de fixation de l'ensemble 25 sur le renfort de côté d'auvent 50. Pour cela, de préférence, on visse la vis 27 dans un taraudage fixé ou venu de matière du renfort de côté d'auvent 50. De préférence, cette vis 27 s'étend selon la direction transversale ou sensiblement transversale. Ainsi, l'ensemble 25, et par conséquent le réservoir 30, est fixé solidement, durablement et positionné de manière optimale grâce à ses points de positionnement au niveau du passage de roue (trou 43) et du support principal (portion 11" de positionnement final du trou oblong 11).

En résumé, la solution utilise des interfaces existantes, notamment sur le passage de roue, pour fixer un réservoir de dégazage. A noter que le réservoir est également une pièce standard, c'est-à-dire déjà fabriquée pour au moins un autre type de véhicule. Ainsi, la solution évite des modifications de la tôlerie qui s'avèrent complexes et coûteuses à mettre en œuvre. En particulier, on profite de la présence de trous dans le passage de roue, par exemple utilisé(s) pour une phase de soudage de la caisse. Il en résulte des économies conséquentes et un investissement particulièrement faible.

En outre la solution est compacte. D'une part, par exemple, le réservoir de dégazage n'a qu'un volume de 0.5 litre. D'autre part, l'association des supports 10, 20 pour la fixation du réservoir est agencée entre une coupelle 60, un passage de roue 40 et un renfort de côté d'auvent 50, c'est-à-dire une zone exigüe, difficile d'accès. La solution permet d'occuper cet espace de manière optimale, en particulier grâce au pivotement R permettant de passer de la position de pré-positionnement ou intermédiaire PI à la position de positionnement final PF du réservoir. En outre, l'implantation du réservoir, grâce au pivotement R en particulier, est facilitée et ergonomique.

De plus, la solution permet de supporter, maintenir, fixer, d'autres éléments tels que le tuyau de climatisation 5 et l'échangeur 4 dans un premier type de chauffage d'habitacle ou le tuyau d'eau 6 dans un deuxième type de chauffage d'habitacle. Ainsi, les supports 10, 20 et le réservoir 30 sont compatibles avec deux types de chauffage. Il en résulte une économie liée à la standardisation de ces pièces.

La solution évite la conception et la fabrication d'un réservoir de dégazage spécifique qui engendreraient notamment des investissements en termes d'outillage, de validations et d'essais.

Ainsi la solution permet de recourir à un réservoir de dégazage et à des éléments de caisse provenant d'autres types de véhicules en production ou ayant été produits dans le passé, pour produire des véhicules électriques de préférence. Malgré le peu d'espace disponible au sein du compartiment moteur, la solution permet de loger le réservoir de dégazage et éventuellement des éléments de type conduits et/ou tuyaux et/ou échangeur, au niveau d'une zone reculée, difficilement exploitable ou utilisable.

Bien que la solution ait été décrite et illustrée en étant agencée au niveau d'un côté avant droit du véhicule, de préférence d'un véhicule électrique, elle peut être implantée au niveau d'un côté avant gauche, voire éventuellement, au niveau d'un des côtés à l'arrière du véhicule. Elle demeure compatible pour un véhicule hybride ou thermique.

En remarque, la solution atteint donc l'objectif recherché de faciliter l'implantation d'un réservoir de dégazage de chauffage d'habitacle au sein d'un compartiment moteur de véhicule électrique, et présente l'avantage de pouvoir être utilisée sur d'autres types de véhicules, à savoir des camions, bus ou cars.

## Revendications

1. Agencement (3) pour un véhicule automobile (1), notamment pour un véhicule automobile électrique, comprenant un réservoir de dégazage (30) pour un circuit de chauffage d'un habitacle (2) d'un tel véhicule, le réservoir de dégazage (30) comprenant une première saillie (33) et une deuxième saillie (32), **caractérisé en ce que** l'agencement (3) comprend :
- un passage de roue (40), notamment un passage de roue en tôle, le passage de roue (40) comprenant un moyen de réception (43) de la première saillie (33), notamment un trou, la première saillie (33) du réservoir de dégazage (30) étant logée dans le moyen de réception (43),
- un support principal (10) pour supporter partiellement le réservoir de dégazage (30) , le support principal (10) comprenant un moyen de pré-positionnement (11') et un moyen de positionnement final (11") du réservoir de dégazage (30), le support principal (10) étant fixé sur le passage de roue (40), la deuxième saillie (32) du réservoir de dégazage (30) coopérant avec le moyen de pré-positionnement (11') ou le moyen de positionnement final (11"),
- un support secondaire (20) participant au maintien du réservoir de dégazage (30).

2. Agencement (3) selon la revendication précédente, **caractérisé en ce que** le moyen de pré-positionnement (11') et le moyen de positionnement final (11") sont constitués par une forme commune, notamment une forme élémentaire commune comme une découpe.

3. Agencement (3) selon l'une des revendications précédentes, **caractérisé en ce que** le moyen de pré-positionnement (11') et le moyen de positionnement final (11") sont constitués par un trou oblong (11).

4. Agencement (3) selon l'une des revendications précédentes, **caractérisé en ce que** le support principal (10) comprend des moyens de fixation (12, 13) destinés à assurer la fixation du support principal (10) sur un passage de roue (40).

5. Agencement (3) selon la revendication précédente, **caractérisé en ce que** les moyens de fixations comprennent un trou (12) et une encoche (13).

6. Agencement (3) selon l'une des revendications précédentes, **caractérisé en ce que** le support principal (10) comprend un moyen de fixation (14) destiné à fixer un échangeur (4), notamment une tige filetée, et/ou comprend un moyen de fixation (15) destiné à fixer un tuyau de climatisation (5), notamment une tige filetée, et/ou comprend un moyen de fixation (16) destiné à fixer un tuyau d'eau (6), notamment un trou oblong.

7. Agencement (3) selon la revendication précédente, **caractérisé en ce que** le support secondaire (20) comprend un moyen de maintien (21) du réservoir de dégazage (30), notamment une patte, le réservoir de dégazage (30) comprenant un moyen de fixation (31), notamment un moyen de fixation comprenant un orifice, coopérant avec le moyen de maintien (21) du support secondaire (20).

8. Agencement (3) selon l'une des revendications précédentes, **caractérisé en ce que** l'agencement (3) comprend un renfort de côté d'auvent (50) agencé à proximité du passage de roue (40), le support secondaire (20) étant fixé sur le renfort de côté d'auvent (50).

9. Véhicule, notamment véhicule automobile (1), **caractérisé en ce qu'**il comprend un agencement (3) selon l'une des revendications précédentes.

10. Procédé de montage d'un agencement (3) selon la revendication 8, **caractérisé en ce qu'**il comprend :
- une étape de montage d'un réservoir de dégazage (30) sur un support secondaire (20) de sorte à obtenir un ensemble (25),
- une étape de montage d'un support principal (10) sur un passage de roue (40),
- une étape de pré-positionnement du réservoir de dégazage (30) de sorte que la première saillie (33) se loge dans le moyen de réception (43) du passage de roue (40) et de sorte que la deuxième saillie (32) coopère avec le moyen de pré-positionnement (11') du support, notamment via une translation sensiblement de haut en bas de l'ensemble (25),
- une étape de positionnement de l'ensemble (25) par pivotement autour de l'axe de la première saillie (33) du réservoir de dégazage (30) de sorte que la deuxième saillie (32) passe du moyen de pré-positionnement (11') au moyen de positionnement final (11"),
- une étape de fixation de l'ensemble (25) sur le renfort de côté d'auvent (50) de sorte à maintenir en position finale l'ensemble (25) par rapport au support principal (10).

## Patentansprüche

1. Anordnung (3) für ein Kraftfahrzeug (1), insbesondere für ein Elektrokraftfahrzeug, umfassend einen Entgasungsbehälter (30) für einen Heizkreislauf eines Innenraums (2) eines solchen Fahrzeugs, wobei der Entgasungsbehälter (30) einen ersten Vorsprung (33) und einen zweiten Vorsprung (32) umfasst, **dadurch gekennzeichnet, dass** die Anordnung (3) umfasst:
- einen Radkasten (40), insbesondere einen Radkasten aus Blech, wobei der Radkasten (40) ein Aufnahmemittel (43) für den ersten Vorsprung (33) umfasst, insbesondere ein Loch, wobei der erste Vorsprung (33) des Entgasungsbehälters (30) in dem Aufnahmemittel (43) aufgenommen wird,
- eine Haupthalterung (10), um den Entgasungsbehälter teilweise (30) zu stützen, wobei die Haupthalterung (10) ein Vorpositionierungsmittel (11') und ein Endpositionierungsmittel (11") für den Entgasungsbehälter (30) umfasst, wobei die Haupthalterung (10) an dem Radkasten (40) befestigt ist, wobei der zweite Vorsprung (32) des Entgasungsbehälters (30) mit dem Vorpositionierungsmittel (11') oder dem Endpositionierungsmittel (11") zusammenwirkt,
- eine Nebenhalterung (20), die zum Halten des Entgasungsbehälters (30) beiträgt.

2. Anordnung (3) nach dem vorhergehenden Anspruch, **dadurch gekennzeichnet, dass** das Vorpositionierungsmittel (11') und das Endpositionierungsmittel (11") aus einer gewöhnlichen Form bestehen, insbesondere einer gewöhnlichen elementaren Form wie einem Ausschnitt.

3. Anordnung (3) nach einem der vorhergehenden Ansprüche, **dadurch gekennzeichnet, dass** das Vorpositionierungsmittel (11') und das Endpositionierungsmittel (11") aus einem Langloch (11) bestehen.

4. Anordnung (3) nach einem der vorhergehenden Ansprüche, **dadurch gekennzeichnet, dass** die Haupthalterung (10) Befestigungsmittel (12, 13) umfasst, die dazu bestimmt sind, das Befestigen der Haupthalterung (10) an einem Radkasten (40) zu gewährleisten.

5. Anordnung (3) nach dem vorhergehenden Anspruch, **dadurch gekennzeichnet**, das die Befestigungsmittel ein Loch (12) und eine Aussparung (13) umfassen.

6. Anordnung (3) nach einem der vorhergehenden Ansprüche, **dadurch gekennzeichnet, dass** die Haupthalterung (10) ein Befestigungsmittel (14) umfasst, das zum Befestigen eines Tauschers (4) bestimmt ist, insbesondere einen Gewindestab, und/oder ein Befestigungsmittel (15) umfasst, das zum Befestigen eines Klimatisierungsschlauchs (5) bestimmt ist, insbesondere einen Gewindestab, und/oder ein Befestigungsmittel (16) umfasst, das zum Befestigen eines Wasserschlauchs (6) bestimmt ist, insbesondere ein Langloch.

7. Anordnung (3) nach dem vorhergehenden Anspruch, **dadurch gekennzeichnet, dass** die Nebenhalterung (20) ein Haltemittel (21) für den Entgasungsbehälter (30) umfasst, insbesondere eine Lasche, wobei der Entgasungsbehälter (30) ein Befestigungsmittel (31) umfasst, insbesondere ein eine Öffnung umfassendes Befestigungsmittel, das mit dem Haltemittel (21) der Nebenhalterung (20) zusammenwirkt.

8. Anordnung (3) nach einem der vorhergehenden Ansprüche, **dadurch gekennzeichnet, dass** die Anordnung (3) eine Windlaufseitenverstärkung (50) umfasst, die in der Nähe des Radkastens (40) angeordnet ist, wobei die Nebenhalterung (20) an der Windlaufseitenverstärkung (50) befestigt ist.

9. Fahrzeug, insbesondere Kraftfahrzeug (1), **dadurch gekennzeichnet, dass** es eine Anordnung (3) nach einem der vorhergehenden Ansprüche umfasst.

10. Verfahren zur Montage einer Anordnung (3) nach Anspruch 8, **dadurch gekennzeichnet, dass** es umfasst:
- einen Schritt des Montierens eines Entgasungsbehälters (30) an einer Nebenhalterung (20), so dass eine Baugruppe (25) erhalten wird,
- einen Schritt des Montierens einer Haupthalterung 10) an einem Radkasten (40),
- einen Schritt des Vorpositionierens des Entgasungsbehälters (30), so dass der erste Vorsprung (33) in dem Aufnahmemittel (43) des Radkastens (40) aufgenommen wird und so, dass der zweite Vorsprung (32) mit dem Vorpositionierungsmittel (11') der Halterung zusammenwirkt, insbesondere durch eine Translation der Baugruppe (25) im Wesentlichen von oben nach unten,
- einen Schritt des Positionierens der Baugruppe (25) durch Schwenken um die Achse des ersten Vorsprungs (33) des Entgasungsbehälters (30), so dass der zweite Vorsprung (32) von dem Vorpositionierungsmittel (11') zu dem Endpositionierungsmittel (11") übergeht,
- einen Schritt des Befestigens der Baugruppe (25) an der Windlaufseitenverstärkung (50), so dass die Baugruppe (25) in Bezug auf die Haupthalterung (10) in der Endposition gehalten wird.

## Claims

1. Arrangement (3) for a motor vehicle (1), notably for an electric motor vehicle, comprising a degassing tank (30) for a heating circuit of a passenger compartment (2) of such a vehicle, the degassing tank (30) comprising a first projection (33) and a second projection (32), **characterized in that** the arrangement (3) comprises:
- a wheel arch (40), notably a wheel arch made of sheet metal, the wheel arch (40) comprising means (43) for receiving the first projection (33), notably a hole, the first projection (33) of the degassing tank (30) being seated in the receiving means (43),
- a main support (10) to partially support the degassing tank (30), the main support (10) comprising pre-positioning means (11') and final positioning means (11") for the degassing tank (30), the main support (10) being fastened to the wheel arch (40), the second projection (32) of the degassing tank (30) cooperating with the pre-positioning means (11') or the final positioning means (11"),
- a secondary support (20) participating in holding the degassing tank (30).

2. Arrangement (3) according to the preceding claim, **characterized in that** the pre-positioning means (11') and the final positioning means (11") are in the form of a common feature, notably a common basic feature such as a cut-out.

3. Arrangement (3) according to one of the preceding claims, **characterized in that** the pre-positioning means (11') and the final positioning means (11") are in the form of an oblong hole (11).

4. Arrangement (3) according to one of the preceding claims, **characterized in that** the main support (10) comprises fastening means (12, 13) for fastening the main support (10) to a wheel arch (40).

5. Arrangement (3) according to the preceding claim, **characterized in that** the fastening means comprise a hole (12) and a notch (13).

6. Arrangement (3) according to one of the preceding claims, **characterized in that** the main support (10) comprises fastening means (14) for fastening an exchanger (4), notably a threaded rod, and/or comprises fastening means (15) for fastening an air conditioning pipe (5), notably a threaded rod, and/or comprises fastening means (16) for fastening a water pipe (6), notably an oblong hole.

7. Arrangement (3) according to the preceding claim, **characterized in that** the secondary support (20) comprises means (21) for holding the degassing tank (30), notably a bracket, the degassing tank (30) comprising fastening means (31), notably fastening means comprising an orifice, cooperating with the holding means (21) of the secondary support (20).

8. Arrangement (3) according to one of the preceding claims, **characterized in that** the arrangement (3) comprises a cowl-side reinforcement (50) arranged close to the wheel arch (40), the secondary support (20) being fastened to the cowl-side reinforcement (50).

9. Vehicle, notably a motor vehicle (1), **characterized in that** it comprises an arrangement (3) according to one of the preceding claims.

10. Method for mounting an arrangement (3) according to Claim 8, **characterized in that** it comprises:
- a step of mounting a degassing tank (30) on a secondary support (20) to obtain an assembly (25),
- a step of mounting a main support (10) on a wheel arch (40),
- a step of pre-positioning the degassing tank (30) so that the first projection (33) is seated in the receiving means (43) of the wheel arch (40) and so that the second projection (32) cooperates with the pre-positioning means (11') of the support, notably via a substantially downward movement of the assembly (25),
- a step of positioning the assembly (25) by pivoting about the axis of the first projection (33) of the degassing tank (30) so that the second projection (32) moves from the pre-positioning means (11') to the final positioning means (11"),
- a step of fastening the assembly (25) to the cowl-side reinforcement (50) so as to hold the assembly (25) in the final position with respect to the main support (10).
